# EUROPEAN PATENT APPLICATION

(11) **EP 4 815 215 A1**
(43) Date of publication of application: **30.09.2026**
(21) Application number: 26166732.3
(22) Date of filing: 23.03.2026
(51) Int. Cl.: H01R 13/66, G01K 1/14, H01R 4/30

(54) **ELECTRICAL CONNECTOR ASSEMBLY AND CHARGING SOCKET**

(30) Priority: 24.03.2025 CN 202510355087
(71) Applicant: Tyco Electronics (Shanghai) Co., Ltd., Pilot Free Trade Zone Shanghai 200131 (CN); Tyco Electronics Technology (SIP) Ltd., Suzhou 215026 (CN)
(72) Inventor: Xia, Leilei, Shanghai, 200233 (CN); Zhang, Jiachen, Suzhou, 32 215123 (CN); Zhu, Fangyue, Shanghai, 200233 (CN); Wang, Jimmy, Shanghai, 200233 (CN)
(74) Representative: Grünecker Patent- und Rechtsanwälte PartG mbB

(57) **Abstract**

An electrical connector assembly, and a charging socket for use in the field of charging an electric vehicle are described herein. The electrical connector assembly includes an electrical connection structure, including: at least one terminal body provided with a plug end and a connection end opposite to each other; a busbar provided with at least one electrical contact end; and at least one connecting piece connected between respective electrical contact end and the connection end of the respective terminal body for establishing an electrically conductive connection therebetween. The electrical connector assembly further includes at least one temperature measuring assembly, each including: a heat-conducting intermediate member pressed against a respective connecting piece; and a temperature sensor inserted into the intermediate member and including a temperature sensing component, which is surrounded by the intermediate member and is in contact with the respective connecting piece and is configured to sense a temperature at which it is located, with a heat transfer path being established between the temperature sensing component and the connecting piece.

## Description

### BACKGROUND OF THE DISCLOSURE

### Field of the Disclosure

Embodiments of the present disclosure generally relate to an electrical connector assembly and a charging socket, and in particular to an electrical connector assembly and a charging socket for charging an electric vehicle, for example, in the technical field of new energy vehicle charging apparatuses.

### Description of the Related Art

In the related art, with the development of science and technology and the enhancement of human environmental awareness, hybrid electric vehicles and battery electric vehicles, etc., are gradually being recognized by the majority of consumers. Similar to the fuel filler port of a traditional fuel vehicle, an electric vehicle needs to be provided with a charging socket at an appropriate location on the vehicle, which can be plugged in and mated with an external charging gun, so as to facilitate the consumer to supply electrical energy to the vehicle. The charging socket generally includes a charging socket housing, a terminal mounting seat and connection terminals. The terminal mounting seat is fixedly installed in the charging socket housing, and the terminals are installed in the terminal mounting seat. One end of each connection terminal is used for plugging with an external charging gun, and the other end of each connection terminal is used for crimping with a wire to achieve an electrical connection therebetween. The housing of the charging socket is fixed to sheet metal of the vehicle body. Specifically, in order to charge an electric vehicle, generally, the charging plug (or referred to as a charging gun) of a charging pile is inserted into and mated with the charging socket provided on the vehicle body of the electric vehicle to charge the electric vehicle.

Due to inevitable ohmic resistance, the electrical conductors in the charging plug are heated. With such heating, the housing of the charging plug may be heated. When the traction battery pack of an electric vehicle is charged, in order to increase the charging speed, it is necessary to increase the charging current flowing through the charging plug; or alternatively, in order to meet user demands, the charging socket is provided with a fast charging interface to reduce the user's charging time, and the fast charging interface needs to withstand a higher voltage and a larger current in a short time. By way of example, once the resistance at the crimping portion between the wire and the connection terminal increases or an overcurrent occurs there for a short time, a large amount of heat is generated, resulting in that the temperature at this portion rises sharply, which will lead to a sharp increase in the temperature of the charging terminals inside the charging socket, thereby posing a significant safety hazard. If the temperature rise cannot be controlled in time, it may lead to safety accidents, for example, burning the charging socket or other electrical equipment.

In the related art, in order to control the temperature rise of the charging terminals, a lead frame is usually provided in the charging socket, and a temperature detector for detecting the temperature of the connection terminals is installed on the lead frame, so as to timely detect the temperature inside the charging socket, especially the temperature at the crimping portion between the wire and the connection terminals, and make respective countermeasures depending on actual temperature as detected, timely eliminate safety hazards, and improve the safety of the vehicle. The temperature detector includes a temperature sensor disposed adjacent to a high-temperature portion to be measured (however, due to space and size limitations, the temperature sensor is often unable to be arranged at the highest temperature rise portion in the charging socket), and optionally, a thermally conductive member, e.g., a thermally conductive pad, is disposed outside the temperature sensor. For example, in the related art, the temperature sensor needs to be pre-inserted into the thermally conductive pad, and then the thermally conductive pad with the temperature sensor installed therein is inserted into a mounting groove on the lead frame or electrically connected to a circuit board, whereby the thermally conductive member is in thermal contact with respective charging terminal, and the temperature sensor is electrically connected to the lead frame or the circuit board. The installation structure of such existing temperature detector is very complicated, difficult to assemble, high in cost, and inconvenient to use; moreover, the temperature sensor and the respective connection terminal are spaced apart, and the heat of the connection terminal is conducted to the temperature sensor through air, therefore, values as detected by such a temperature measurement method are not accurate enough, then a response cannot be made in time, and thus safety hazards cannot be eliminated in time. In addition, in the related art, the thermally conductive pad is typically inserted into the mounting groove on the lead frame along the axial direction of the charging terminal. Therefore, in the related art, the thermally conductive pad is easy to move in the axial direction of the charging terminal, which will reduce the thermal contact performance and affect the timeliness and accuracy of temperature detection.

To this end, there is an urgent need in the art for an improved electrical connector assembly and a charging socket, which take into account that the aluminum bar screw connection location in the busbar of the charging socket for adapting insertion of terminal of the mating electrical connector is typically a location with highest temperature rise portion inside the charging socket. Then, a simple structural improvement can be made by means of the existing threaded member feature for screwing and installing the busbar (e.g., aluminum bar) together with the terminal. On one hand, a sealing member (e.g., a sealing ring) made of a high thermal conductivity material, e.g., high thermal conductivity silicone, is provided at this aluminum bar screw connection location, and a temperature sensing module of the temperature sensor is embedded and installed into the sealing member surrounding it such that the temperature sensing module directly abuts against the threaded member (e.g., the cross or hexagonal groove at the top thereof for screwdriver's screwing operation); on the other hand, the sealing ring closely abuts against the threaded member, which also facilitates the full transfer of the temperature on the threaded member to the temperature sensing module. As such, with these two aspects, it facilitates a temperature sensing structure of the charging socket that implements a full detection of the temperature at the highest temperature rise location inside the charging socket. Moreover, there is no longer a need to additionally provide a lead frame and/or a printed circuit board for installing the temperature sensor, thereby simplifying the structure. Subsequently, the cover is snap-fitted and installed on the top of the sealing member, thereby achieving a quick-mounting type temperature sensing structure of the charging socket in only two steps.

### SUMMARY OF THE DISCLOSURE

The embodiments of the present disclosure aim to alleviate at least one aspect of the aforementioned and other problems and defects in the related art by providing an electrical connector assembly and a charging socket having a simple structure and having a temperature sensing structure that directly contacts a location whose temperature is to be measured.

In order to achieve the above purpose, the present disclosure is implemented at least through the following technical solutions:
According to a first aspect of the disclosure, it provides an electrical connector assembly. The electrical connector assembly includes an electrical connection structure, including: at least one terminal body provided with a plug end and a connection end opposite to each other; a busbar provided with at least one electrical contact end; and at least one connecting piece connected between respective electrical contact end and the connection end of the respective terminal body for establishing an electrically conductive connection therebetween. The electrical connector assembly further includes at least one temperature measuring assembly, each including: a heat-conducting intermediate member pressed against a respective connecting piece; and a temperature sensor inserted into the intermediate member and including a temperature sensing component, which is surrounded by the intermediate member and is in contact with the respective connecting piece and is configured to sense a temperature at which it is located, and a heat transfer path is established between the temperature sensing component and the connecting piece.

According to the exemplary embodiments disclosed herein, the temperature sensing component is arranged to be surrounded by the intermediate member and pressed into heat-transferring contact against a top of the respective connecting piece.

According to the exemplary embodiments disclosed herein, the at least one terminal body includes two terminal bodies, each being provided with a cylindrical plug end and a flat connection end opposite to each other, the cylindrical plug end being configured to be mated with a respective mating terminal of a mating electrical connector; the busbar includes: two conductive core portions electrically connected to respective connection ends of the two terminal bodies respectively, each of the conductive core portions being provided with an electrical contact end extending towards the respective terminal body; and an insulation portion including a first insulation section interposed between the two conductive core portions and a second insulation section wrapped outside the two conductive core portions.

According to the exemplary embodiments disclosed herein, in response to the connection end and the respective electrical contact end being pressed against each other and in contact with each other, the at least one connecting piece includes at least one threaded member extending through and threaded between the respective electrical contact end and the connection end of the respective terminal body, the at least one threaded member including two threaded members, each threaded member extending through and pressing against the electrical contact end of the respective conductive core portion and the connection end of the respective terminal body to establish a conductive connection therebetween.

According to the exemplary embodiments disclosed herein, in response to the connection end and the respective electrical contact end being directly secured together with each other, the at least one connection includes at least one conductive contact secured to both the respective electrical contact end and the connection end of the respective terminal body, respectively.

According to the exemplary embodiments disclosed herein, the connection ends and respective electrical contact ends are soldered to each other or crimped to fit with each other.

According to the exemplary embodiments disclosed herein, the at least one conductive contact includes a fastening pin.

According to the exemplary embodiments disclosed herein, the temperature sensor further includes at least one pin arranged to lead out of the temperature sensing component and extend outside the intermediate member and configured to output an electrical signal of the temperature sensor.

According to the exemplary embodiments disclosed herein, the intermediate member presses against and substantially covers an upper exposed portion at the top of the respective connecting piece other than a portion of the connecting piece covered by the temperature sensing component.

According to the exemplary embodiments disclosed herein, the temperature sensor is disposed centrally inside the intermediate member, preferably coaxially with the intermediate member.

According to the exemplary embodiments disclosed herein, each of the terminal bodies extends in a longitudinal direction and is provided with the plug end that is cylindrical and the connection end that is flattened, the plug end and the connection end being opposite to each other in the longitudinal direction.

According to the exemplary embodiments disclosed herein, each of the terminal bodies extends in a vertical direction perpendicular to the longitudinal direction and is provided with the plug end that is cylindrical and the connection end that is flattened, the plug end and the connection end being opposite to each other in the vertical direction, the connection end being arranged to extend perpendicular to the vertical direction to at least partially overlap and contact the electrical contact end of the respective conductive core portion.

According to the exemplary embodiments disclosed herein, the two conductive core portions of the busbar are each in the shape of plate and both are overlaid in a vertical direction perpendicular to the longitudinal direction and spaced apart by the first insulating section, and the respective electrical contact ends of the two conductive core portions are biased to be mutually offset in a transverse direction perpendicular to both the longitudinal direction and the vertical direction, respectively.

According to the exemplary embodiments disclosed herein, the electrical contact end of each of the conductive core portions and the connection end of the respective terminal body are overlaid in a vertical direction perpendicular to the longitudinal direction.

According to the exemplary embodiments disclosed herein, the electrical contact end of each of the conductive core portions is positioned above the connection end of the respective terminal body in the vertical direction.

According to the exemplary embodiments disclosed herein, a respective electrical contact end of each of the conductive core portions is formed with a through first hole, and a through second hole is formed for a connection end of a respective terminal body of each of the conductive core portions, the first hole and the respective second hole being aligned with each other, and a respective connecting piece for each of the conductive core portions sequentially extends through the first hole and the second hole.

According to the exemplary embodiments disclosed herein, each of the conductive core portions further includes an electrical connection barrel including: a hollow conductive cylinder portion, a cylindrical outer surface of the conductive cylinder portion being adapted to be received in the first hole of the electrical contact end of the conductive core portion; and a peripheral flange extending outward in a circumferential direction from an outer surface of the conductive cylinder portion.

According to the exemplary embodiments disclosed herein, the interior of the conductive cylinder portion defines a through hole having an elliptical cross-section extending vertically therethrough, with a minor axis of the elliptical cross-section being dimensioned to receive a respective connecting piece.

According to the exemplary embodiments disclosed herein, the elliptical cross-section of the through hole of the conductive cylinder portion has a major axis parallel to the longitudinal direction.

According to the exemplary embodiments disclosed herein, respective electrical connection barrels of the two conductive core portions extend from lower surfaces of the respective conductive core portions by different lengths, with a difference therebetween being substantially equal to a distance of respective lower surfaces of the two conductive core portions in the vertical direction.

According to the exemplary embodiments disclosed herein, an upper portion of the first hole is provided with a first recessed portion, which is configured to at least partially receive and constrain a head of a respective threaded member, and a lower portion of the first hole is provided with a second recessed portion, which is configured to at least partially receive and constrain a peripheral flange of a respective electrical connection barrel, and the second hole is a through hole which is provided with a smooth inner wall having a single inner diameter for free end of the threaded member to extend therethrough and protrude therefrom.

According to the exemplary embodiments disclosed herein, the electrical connection structure further includes two nuts, each nut being screwed to press against the respective electrical contact end and the respective connection end between the head of the threaded member and the nut, with its internal thread in engagement with external thread of the portion of the respective threaded member projecting outwards from the second hole.

According to the exemplary embodiments disclosed herein, the intermediate member is a seal made of a thermally conductive material.

According to the exemplary embodiments disclosed herein, the intermediate member is a sealing ring made of silicone having high thermal conductivity.

According to the exemplary embodiments disclosed herein, the temperature measuring assembly further includes at least one cover that at least partially covers a top of the intermediate member, and the cover is provided with at least one through hole to allow a pin of the temperature sensor to be led out, axially facing away from the connection member, from the intermediate member.

According to a second aspect of the disclosure, it provides a charging socket including: the electrical connector assembly as discussed above; and a housing including a housing body which is configured to at least partially receive the electrical connector assembly.

According to the exemplary embodiments disclosed herein, the housing further includes: a snout configured to protrude longitudinally from the housing body and configured to at least partially circumferentially constrain a portion of the busbar extending longitudinally beyond the housing body; at least one hollow compartment which opens outwards, each compartment extending from the top of the housing body in a vertical direction perpendicular to the longitudinal direction and configured for insertion of the respective threaded member therein.

According to the exemplary embodiments disclosed herein, a pair of lugs are provided on an outer surface of each compartment and circumferentially arranged to be opposite to each other, and a pair of notches are formed on an outer side of the respective cover and diametrically arranged to be opposite to each other, each lug and respective notch being snap-fitted to each other, when assembled, to removably connect the respective cover to each compartment.

According to the exemplary embodiments disclosed herein, a spacer is formed at a radially middle portion on an inter side of the housing body , the spacer dividing the interior of the housing into a first chamber facing the bus bar and a second chamber facing away from the bus bar, the first chamber being configured to accommodate at least a portion of the bus bar and the connection end of the at least one terminal body, and the second chamber being configured to accommodate the plug end of the at least one terminal body.

According to the exemplary embodiments disclosed herein, the electrical contact end of the bus bar is accommodated within the first chamber inside the housing body, and a portion of the bus bar other than the electrical contact end is at least partially accommodated within the snout.

According to the exemplary embodiments disclosed herein, the at least one connecting piece is inserted into the first chamber inside the housing body by passing through a respective compartment, and a respective intermediate member is inserted within the first chamber inside the housing body by at least partially passing through the respective compartment.

According to the exemplary embodiments disclosed herein, the charging socket further includes: a gasket sleeved around the bus bar and arranged between the housing body and the bus bar, and abutting against a side of the spacer facing away from the second chamber; and a plug portion sleeved around the bus bar and accommodated within the snout longitudinally outside the gasket and configured to press the gasket toward the spacer.

### BRIEF DESCRIPTION OF THE DRAWINGS

The accompanying drawings, which are incorporated in and constitute a portion of the specification, illustrate certain aspects of the subject matter disclosed herein and, together with the description, facilitate interpreting some principles associated with the embodiments as disclosed. In the attached drawings:
FIG. 1A and FIG. 1B respectively illustrate a schematic perspective view and a schematic exploded view of an electrical connector assembly according to an embodiment of the present disclosure;
FIG. 2A and FIG. 2B respectively illustrate schematic perspective views of an electrical connection structure in the electrical connector assembly as shown in FIG. 1A and FIG. 1B, as viewed from different viewing angles, and FIGS. 2C to 2H respectively illustrate a front view, a rear view, a top view, a bottom view, a left side view, and a right side view of the electrical connection structure;
FIG. 3 illustrates a schematic perspective view of a respective electrical connection structure in an alternative electrical connector assembly according to an alternative embodiment of the present disclosure;
FIG. 4A to FIG. 4B respectively illustrate schematic perspective views of a busbar shown from top and bottom viewing angles;
FIG. 5 shows a schematic perspective view of two electrical connection barrels;
FIG. 6 shows a schematic perspective view of a nut;
FIG. 7A illustrates a schematic perspective view of a charging socket according to an embodiment of the present disclosure, and FIG. 7B and FIG. 7C respectively illustrate a schematic exploded view, in which the charging socket is completely exploded and a schematic exploded view, in which the charging socket is partially disassembled, of a charging socket according to an embodiment of the present disclosure (in which the electrical connector assembly is completely shown).

### DETAILED DESCRIPTION OF EMBODIMENTS OF THE DISCLOSURE

The present disclosure will now be described in detail with reference to the accompanying drawings, which are provided as illustrative examples of the present disclosure to enable those skilled in the art to practice the present disclosure. It is noteworthy that the following drawings and examples are not intended to limit the scope of the present disclosure to a single embodiment, but other embodiments are possible by interchange of some or all of the described or illustrated elements. Furthermore, where certain elements of the present disclosure may be partially or completely implemented using known components, only those portions of such known components that are necessary for an understanding of the present disclosure will be described, and detailed descriptions of other portions of such known components will be omitted so as not to obscure the present disclosure. Unless otherwise specified herein, embodiments described as being implemented in software should not be limited thereto, as will be understood by those skilled in the art, but may include embodiments implemented in hardware or a combination of software and hardware, and vice versa. In this specification, embodiments showing singular components should not be considered limiting; rather, unless expressly stated otherwise herein, the present disclosure is intended to encompass other embodiments including a plurality of the same components, and vice versa. Furthermore, applicants do not intend any term in the specification or claims to be ascribed an uncommon or special meaning unless expressly set forth as such. Additionally, the present disclosure encompasses present and future known equivalents to the known components referred to herein by way of illustration.

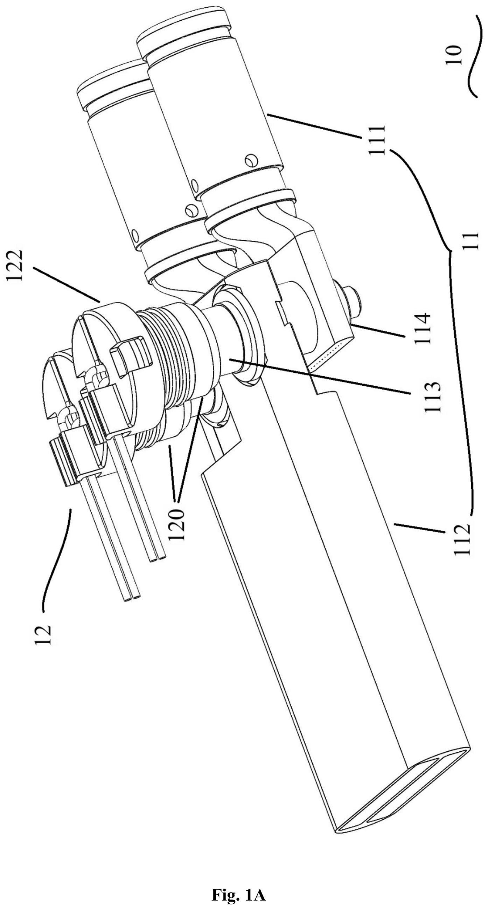

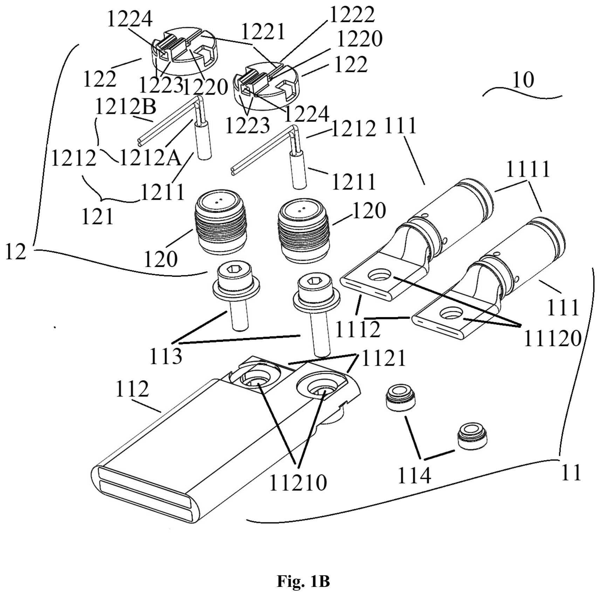

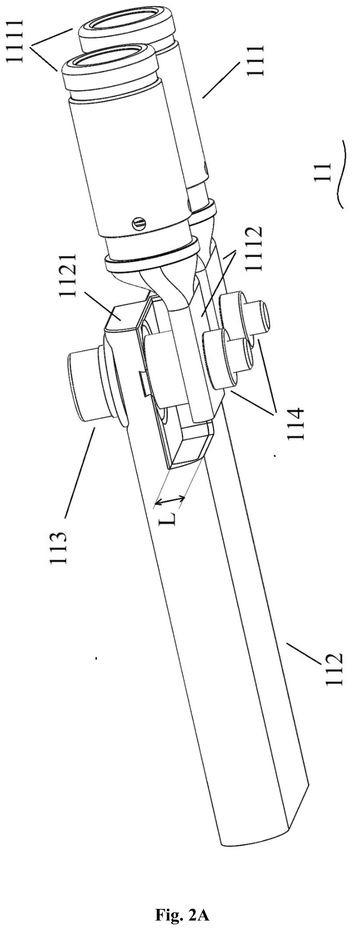

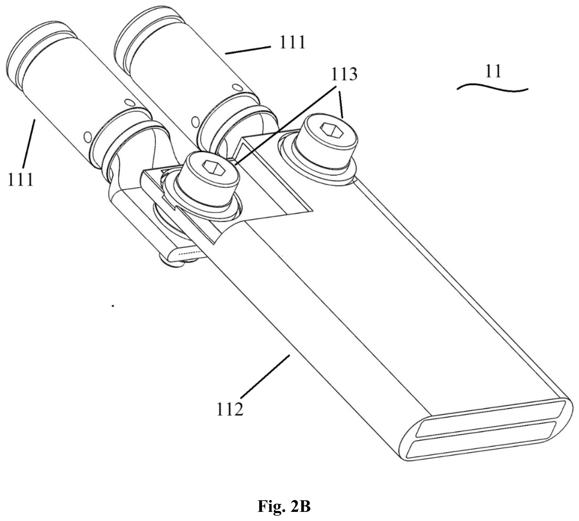

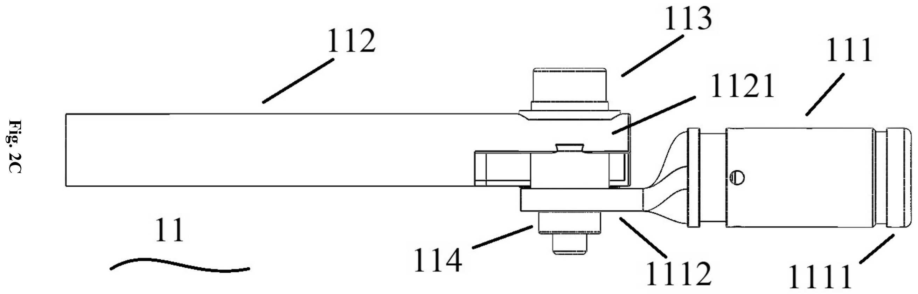

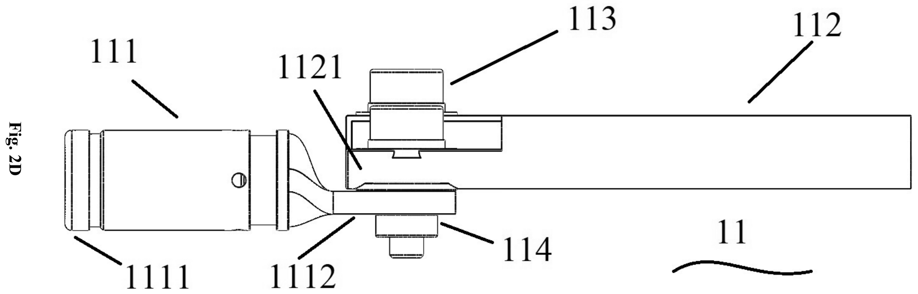

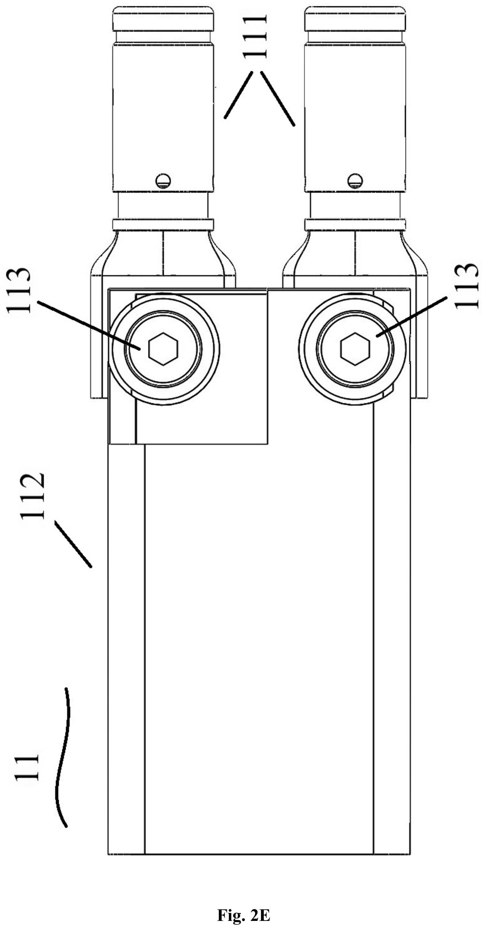

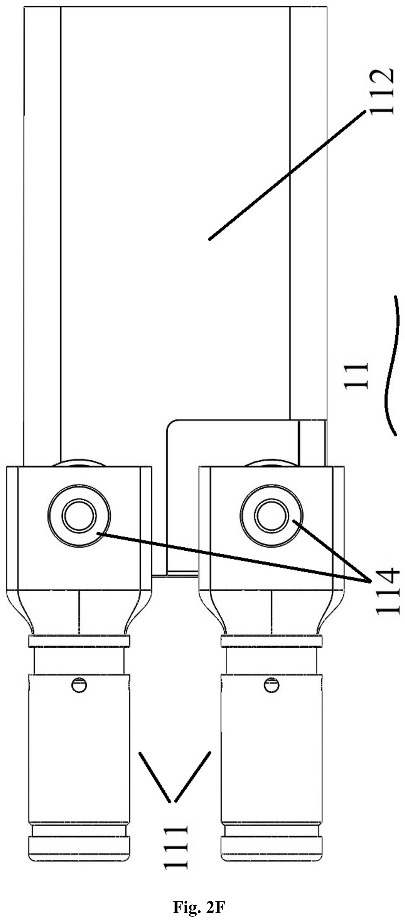

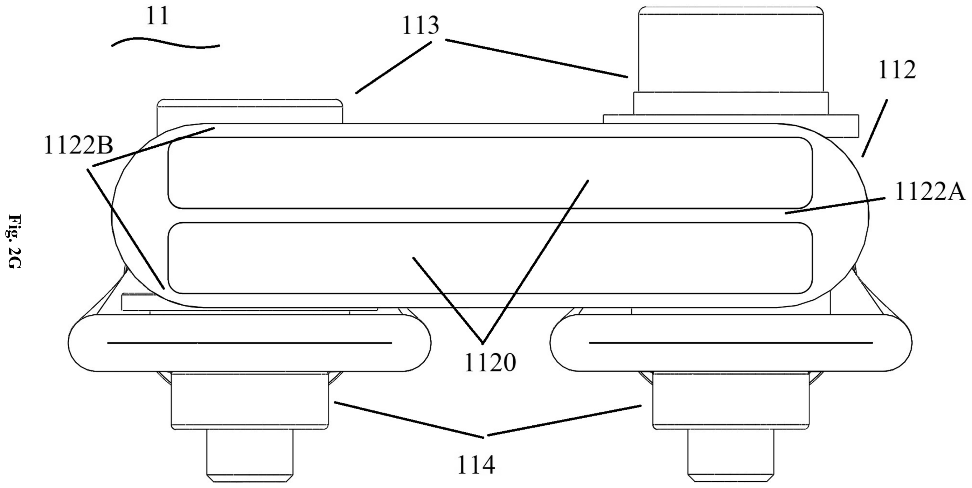

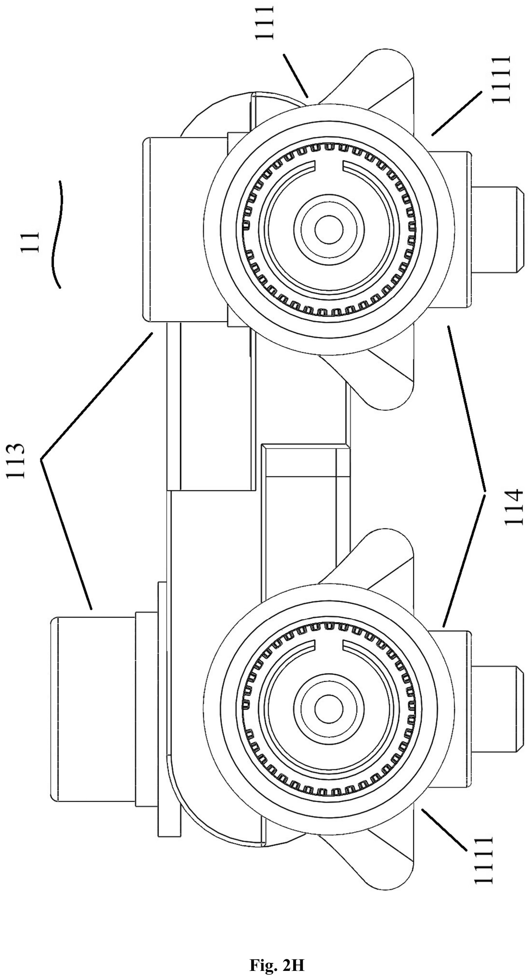

Unless otherwise specified, "bottom" and "top", "upper" and "lower", etc. appearing in the content describing the charging socket housing in the present disclosure are relative concepts. Specifically, the upper and lower directions shown in FIGS. 1 and 2 are the corresponding top and bottom ends. In this embodiment, the axial direction is the longitudinal direction in the drawings. The circumferential direction is the circumferential direction described in the drawings.

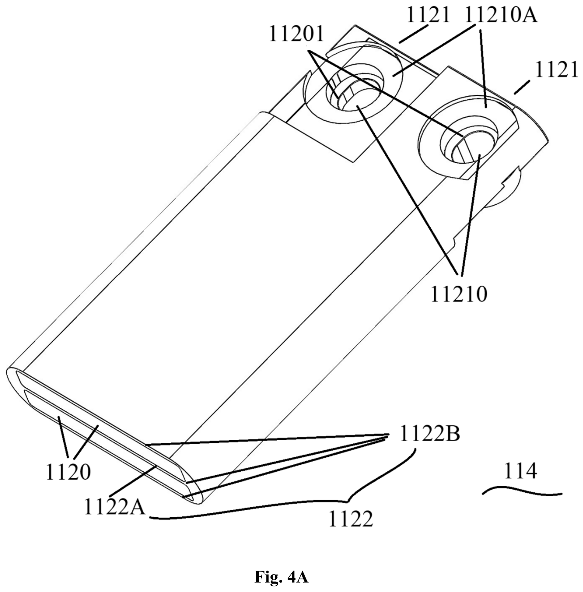

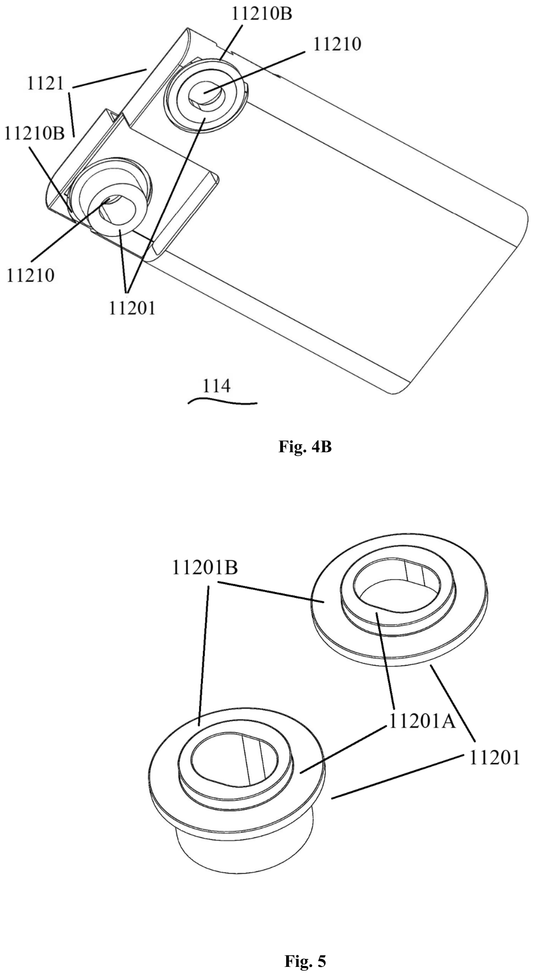

FIG. 1A and FIG. 1B respectively illustrate a schematic perspective view and a schematic exploded view of an electrical connector assembly 10 according to an embodiment of the present disclosure. FIG. 2A and FIG. 2B respectively illustrate schematic perspective views of an electrical connection structure in the electrical connector assembly as shown in FIG. 1A and FIG. 1B, as viewed from different viewing angles, and FIGS. 2C to 2H respectively illustrate a front view, a rear view, a top view, a bottom view, a left side view, and a right side view of the electrical connection structure. FIG. 4A to FIG. 4B respectively illustrate schematic perspective views of a busbar shown from top and bottom viewing angles.

According to a general technical concept of the present disclosure, for example as illustrated, an electrical connector assembly 10 is provided, which is suitable for use in the field of electric vehicle charging and includes an electrical connection structure 11. By way of example, as illustrated, the electrical connection structure 11 includes: at least one terminal body 111, for example, the terminal body 111 is an integrally formed component, and is constructed to extend, e.g., in a longitudinal direction (also referred to as its length direction) or in a vertical direction perpendicular to the longitudinal direction, and is provided with a plug end 1111 and a connection end 1112 opposite to each other. The plug end 1111 is, for example, cylindrical for receiving insertion of a mating terminal of a mating electrical connector assembly. The connection end 1112 is, for example, flat. The electrical connection structure 11 may further include a busbar 112 provided with at least one electrical contact end 1121 (herein by way of example, among the plug end 1111 and connection end 1112 of the terminal body 111 opposite to each other, the connection end 1112 is disposed adjacent to the electrical contact end 1121 of the busbar 112, and the plug end 1111 is disposed facing away from the electrical contact end 1121 of the busbar 112). The electrical connection structure 11 may further include at least one connecting piece (by way of example, a threaded member 113, which is typically provided with an external thread) connected between a respective electrical contact end 1121 and the connection end 1112 of the respective terminal body 111 for establishing an electrically conductive connection therebetween. Furthermore, by way of example, as illustrated, the electrical connector assembly 10 further includes at least one temperature measuring assembly 12. Each of the temperature measuring assembly 12 includes: a heat-conducting intermediate member 120 and a temperature sensor 121. The heat-conducting intermediate member 120 is pressed against a respective connecting piece, more specifically, for example, pressed against a top of the threaded member 113 (more specifically, e.g., a groove at the top, more specifically, such as a cross groove or a hexagon groove for insertion of a screwdriver for screwing). The temperature sensor 121 is inserted into the intermediate member 120 and includes a temperature sensing component 1211, which is surrounded by the intermediate member 120 and is in contact with the respective connecting piece and is configured to sense a temperature at which it is located. A heat transfer path is established between the temperature sensing component 1211 and the connecting piece. In a specific exemplary embodiment, for example as illustrated, the temperature sensing component 1211 is arranged to be surrounded by the intermediate member 120 and pressed into heat-transferring contact against a top of the respective connecting piece. Optionally, the temperature sensing component 1211 may also be arranged to contact (e.g., be pressed against) other portions of the respective connecting piece, including side portions.

With this arrangement, as such, upon consideration that, for the aluminum bar screw connection location in the busbar 112 of the charging socket 1, which is typically a portion with the highest temperature rise inside the charging socket for adapting the insertion terminal of the mating electrical connector, a simple structural improvement is achieved by utilizing features of the existing threaded member 113 used for screwing and mounting the busbar 112 (e.g., aluminum bar) together with the terminal. Thereby, on one hand, a sealing member (e.g., a sealing ring) made of a high thermal conductivity material, e.g., high thermal conductivity silicone, is provided at this aluminum bar screw connection location, and a temperature sensing module of the temperature sensor 121 is embedded and installed into the sealing member surrounding it such that the temperature sensing module directly abuts against the threaded member 113 (e.g., the cross or hexagonal groove at the top thereof for screwing operation of a screwdriver); on the other hand, the sealing ring closely abuts against the threaded member 113, which also facilitates the full transfer of the temperature on the threaded member 113 to the temperature sensing module. As such, with a synergistic effect of these two aspects, it facilitates a temperature sensing structure of the charging socket 1 that implements an instant detection of the temperature at the highest temperature rise location inside the charging socket 1. Moreover, it is not necessary to additionally provide a lead frame and/or a printed circuit board for installing the temperature sensor 121, thereby simplifying the structure.

According to an exemplary embodiment of the present disclosure, further, for example, as illustrated, the at least one terminal body 111 includes two terminal bodies 111, each being provided with a cylindrical plug end 1111 and a flat connection end 1112 opposite to each other. The cylindrical plug end 1111 is configured to be mated with a respective mating terminal of a mating electrical connector. Herein by way of example, the plug end 1111 and connection end 1112 of the terminal body 111 opposite to each other are both made of a conductive material such as a metallic material. The connection end 1112 is disposed adjacent to the electrical contact end 1121 of the busbar 112, and the plug end 1111 is disposed facing away from the electrical contact end 1121 of the busbar 112. In a more specific embodiment, for example, the plug end 1111 is constructed to be provided with a cylindrical wall and the cylindrical wall defines a plug hole, the plug hole being configured for insertion of a connection terminal (not shown, such as a mating terminal in a charging gun, e.g., in the form of a pin) of a respective mating electrical connector assembly to establish an electrical connection through a conductive contact between the connection terminal and the cylindrical wall of the plug end or a conductive member therein. Furthermore, for example, the plug hole includes, e.g., a locking piece which is obliquely arranged, and a respective mating terminal of the respective mating electrical connector assembly is correspondingly provided with, e.g., a respective locking groove which is circumferentially arranged, the locking piece being configured to abut within the locking groove to prevent disengagement of the connection terminal. Moreover, in a more specific embodiment, for example, the connection end 1112 is a sheet-like conductive member, and is configured to be pressed together with, e.g., the electrical contact end of the busbar via a fastening action (e.g., crimping) of the threaded member, or alternatively by welding, so as to establish an electrical connection through conductive contact therebetween. Furthermore, the plug end 1111 and the connection end 1112 establish a conductive path therebetween via the terminal body 111. The busbar 112 includes: two conductive core portions 1120 electrically connected to respective connection ends 1112 of the two terminal bodies 111 respectively, each conductive core portion 1120 being made of, e.g., a conductive material such as a metallic material and being provided with an electrical contact end 1121 extending towards the respective terminal body 111. The busbar 112 further includes: an insulation portion 1122 including a first insulation section 1122A interposed between the two conductive core portions and a second insulation section 1122B wrapped outside the two conductive core portions 1120.

Furthermore, in an exemplary embodiment according to the present disclosure, for example, in response to the connection end 1112 and the respective electrical contact end 1121 being pressed against each other to be in contact with each other, the at least one connecting piece includes at least one threaded member 113 extending through and threaded between the respective electrical contact end and the connection end of the respective terminal body 111, the at least one threaded member 113 including two threaded members 113, each threaded member 113 extending through and pressing against the electrical contact end 1121 of the respective conductive core portion 1120 and the connection end 1112 of the respective terminal body 111 to establish a conductive connection therebetween.

As such, with the above arrangement, by using the temperature sensor 121 directly abutting against the threaded member 113, a real-time and accurate temperature detection at the screw connection location is achieved in a conventional arrangement of the busbar 112 connected with two terminal bodies 111, reducing measurement errors unnecessarily introduced by redundant heat transfer paths, and avoiding provision of additional lead frames or printed circuit boards.

Furthermore, in an alternative exemplary embodiment according to the present disclosure, for example, in response to a condition that the connection end 1112 and the respective electrical contact end 1121 are directly secured together with each other, the at least one connecting piece includes at least one conductive contact secured to both the respective electrical contact end and the connection end of the respective terminal body, respectively. Specifically, by way of example, the connection ends 1112 and respective electrical contact ends 1121 are soldered to each other or crimped to fit with each other. In a more specific exemplary embodiment, for example, the at least one conductive contact includes a fastening pin. As such, essentially, the at least one connecting piece may also adopt other forms of fasteners besides the threaded member as mentioned above, as long as it can establish a conductive connection between the connection end 1112 and the respective electrical contact end 1121 through contact.

Furthermore, regarding the temperature measuring assembly 12, in a specific embodiment, as illustrated by way of example, the temperature sensor 121 further includes at least one pin 1212, the at least one pin 1212 being arranged to lead out of the temperature sensing component 1211 and to extend outside the intermediate member 120 (illustrated as being bent, after being led out, to extend in a plane orthogonal to the vertical direction perpendicular to the longitudinal direction), and configured to output an electrical signal of the temperature sensor 121.

For the electrical connection structure 11, in a further embodiment, as illustrated by way of example, the intermediate member 120 presses against and substantially covers an upper exposed portion at the top of the respective connecting piece (e.g., at the top of the threaded member 113 or the fastening pin) other than a portion thereof covered by the temperature sensing component 1211. As such, this facilitates more sufficient heat transfer from the screw connection location, which generates the highest temperature rise, to the temperature sensor 121, so as to improve the accuracy of temperature detection at the highest temperature portion of the electrical connection structure 11.

By way of example, the temperature sensor 121 is disposed centrally inside the intermediate member 120, preferably coaxially with the intermediate member 120. Since the top of the threaded member 113 at the screw connection location is typically protruding, such an arrangement facilitates the temperature sensing component 1211 of the temperature sensor 121 to abut against the top of the threaded member 113 as sufficiently as possible to achieve a sufficient heat transfer.

As illustrated, by way of example, each terminal body 111 extends in a longitudinal direction and is provided with the plug end 1111 that is cylindrical and the connection end 1112 that is flattened, the plug end 1111 and the connection end 1112 being opposite to each other in the longitudinal direction.

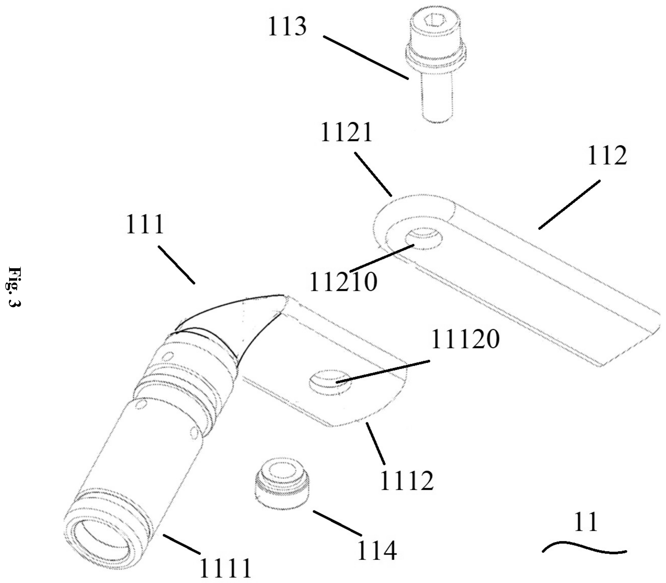

FIG. 3 illustrates a schematic perspective view of a respective electrical connection structure 11 in an alternative electrical connector assembly 10 according to an alternative embodiment of the present disclosure.

In an alternative exemplary embodiment, for example, as illustrated in FIG. 3, each terminal body 111 extends in a vertical direction perpendicular to the longitudinal direction and is provided with the plug end 1111 that is cylindrical and the connection end 1112 that is flattened, the plug end 1111 and the connection end 1112 being opposite to each other in the vertical direction. The connection end 1112 is arranged to extend perpendicular to the vertical direction to at least partially overlap and contact the electrical contact end 1121 of the respective conductive core portion 1120.

As such, a respective electrical connection structure 11 for an alternatively configured electrical connector assembly 10 is achieved, in which the terminal body 111 and the busbar 112 extend perpendicular to each other. The temperature measuring assembly 12 of the present application is also applicable to this electrical connection structure 11. In a further exemplary embodiment, for example, as illustrated, the two conductive core portions 1120 of the busbar 112 are each in the shape of a plate and both are overlaid in a vertical direction perpendicular to the longitudinal direction and spaced apart by the first insulation section 1122A, and the respective electrical contact ends 1121 of the two conductive core portions 1120 are biased to be mutually offset in a transverse direction perpendicular to both the longitudinal direction and the vertical direction, respectively. In other words, in the illustrated embodiment, the width of each electrical contact end 1121 of the busbar 112 is smaller than the width of the portion of the busbar 112 other than the electrical contact end 1121. And there may be two electrical contact ends 1121 of the busbar 112 offset relative to each other along the width direction of the busbar. One of the two electrical contact ends 1121 has a thickness equal to the overall thickness of the busbar and is electrically connected to the conductive core portion on the upper side (i.e., the side facing the connecting piece), and the other of the two electrical contact ends 1121 has a thickness smaller than the overall thickness of the busbar, i.e., it is arranged to be recessed, specifically, for example, by removal of material, and is electrically connected to the conductive core portion on the lower side (i.e., the other side facing away from the connecting piece). That is to say, the two conductive core portions 1120 partially overlap each other in the vertical direction, i.e., the thickness direction, and are electrically conductively connected to respective electrical contact ends, respectively. By way of example, projections of the pair of flattened conductive core portions 1120 in the vertical direction at least partially overlap each other.

As such, with this arrangement, the two conductive core portions at least partially overlay one above the other in the vertical direction, i.e., in the thickness direction of the busbar, and their respective electrical contact ends are offset from each other in a lateral direction, i.e., the width direction of the busbar. As compared with the related art, two pairs of electrical connections leading from the two conductive core portions respectively to respective different connection ends are achieved on a limited projected area, which can effectively improve space utilization to increase the practically usable conductive width of the flattened conductive core portions 1120, thereby enhancing current-carrying capacity of the conductive core portions 1120.

Furthermore, by offsetting the respective electrical contact ends 1121 of the pair of flattened conductive core portions 1120 overlaid relative to each other in the transverse direction, facilitating enhancement of space utilization to achieve screw connection with the connection ends 1112 of the respective terminal bodies 111 respectively, i.e., the two screw connection locations are essentially arranged side by side in the transverse direction, thereby avoiding unnecessary lengthening caused by arranging screw connection locations sequentially in the longitudinal direction.

In an exemplary embodiment according to the present disclosure, for example, as illustrated, the electrical contact end 1121 of each conductive core portion 1120 and the connection end 1112 of the respective terminal body 111 are overlaid in a vertical direction perpendicular to the longitudinal direction. Since both the electrical contact ends 1121 and the respective connection ends 1112 are flattened, this mutual connection after vertical overlaying facilitates sufficient contact and firm bonding therebetween, facilitating reliable electrical connection.

In a further embodiment, for example, as illustrated, the electrical contact end 1121 of each conductive core portion 1120 is positioned above the connection end 1112 of the respective terminal body 111 in the vertical direction. As such, each electrical contact end 1121 is clamped between the threaded member 113 and the respective connection end 1112.

Furthermore, regarding the screw connection between the busbar 112 and the terminal body 111, in a more specific embodiment, for example, as illustrated, a respective electrical contact end 1121 of each conductive core portion 1120 is formed with a through first hole 11210, and a through second hole 11120 is formed for a connection end 1112 of a respective terminal body 111 of each conductive core portion 1120. And, based on the aforementioned arrangement where the electrical contact end 1121 is positioned above the respective connection end 1112 in the vertical direction, a respective connecting piece (e.g., threaded member 113, or fastening pin) for each conductive core portion 1120 sequentially extends through the first hole 11210 and the second hole 11120.

FIG. 5 shows a schematic perspective view of two electrical connection barrels 11201. In an exemplary embodiment according to the present disclosure, for example, as illustrated, each conductive core portion 1120 further includes an electrical connection barrel 11201 including: a hollow conductive cylinder portion 11201A and a peripheral flange 11201B. A cylindrical outer surface of the conductive cylinder portion 11201A is adapted to be received in the first hole 11210 of the electrical contact end 1121 of the conductive core portion 1120. The peripheral flange 11201B extends outward in a circumferential direction from an outer surface of the conductive cylinder portion 11201A, whereby the electrical connection barrel 11201 is seated in the respective conductive core portion 1120. By way of embodiment, the conductive cylinder portion 11201A is riveted into the respective first hole 11210, and is exposed from the insulation portion 1122 of the busbar 112 for conductive contact, rather than being covered by the insulating material.

In the embodiment as illustrated, raised top surfaces of the two electrical connection barrels 11201 are arranged to be flush with each other in one and the same plane perpendicular to the vertical direction.

In an exemplary embodiment according to the present disclosure, for example, as illustrated, a through hole having an elliptical cross-section extending vertically therethrough is defined in the interior of the conductive cylinder portion 11201A, with a minor axis of the elliptical cross-section being dimensioned to receive a respective connecting piece (e.g., threaded member 113, or fastening pin).

In an exemplary embodiment according to the present disclosure, for example, as illustrated, the elliptical cross-section of the through hole of the conductive cylinder portion 11201A is arranged with a major axis thereof parallel to the longitudinal direction.

With this arrangement, an installation redundancy can be provided in the longitudinal direction when each terminal body 111 is screwed to the busbar 112, enabling an arrangement in which the two terminal bodies 111 are arranged substantially side-by-side.

In an exemplary embodiment according to the present disclosure, for example, the terminal body 111 and the electrical connection barrel 11201 are made of copper so as to enhance the conductive capability of the terminal body 111 and the electrical connection barrel 11201. The flattened conductive core portion 1120 is made of aluminum to be an aluminum bar, so as to reduce manufacturing cost while still ensuring conductive capability.

Although not illustrated, in an exemplary embodiment of the present disclosure, for example, the conductive cylinder portion 11201A of the aforementioned electrical connection barrel 11201 may also be integrally formed within the first hole 11210.

In an exemplary embodiment according to the present disclosure, for example, as illustrated, respective electrical connection barrels 11201 of the two conductive core portions 1120 extend from lower surfaces of the respective conductive core portions 1120 by different lengths, with a difference therebetween being substantially equal to a distance L of respective lower surfaces of the two conductive core portions 1120 in the vertical direction. With this arrangement, the two different electrical connection barrels 11201 are flush with each other at their respective lower ends in the vertical direction, such that the upper surfaces of the connection ends 1112 of the two terminal bodies 111 can be pressed in a coplanar manner and subsequently screwed to the lower surfaces of these two electrical connection barrels 11201.

In an exemplary embodiment according to the present disclosure, for example, as illustrated, an upper portion of the first hole 11210 is provided with a first recessed portion 11210A, which is configured to at least partially receive and constrain a head of a respective threaded member 113, and a lower portion of the first hole 11210 is provided with a second recessed portion 11210B, which is configured to at least partially receive and constrain a peripheral flange 11201B of a respective electrical connection barrel 11201, and the second hole 11120 is a through hole which is provided with a smooth inner wall having a single inner diameter for a free end of the threaded member 113 to extend therethrough and protrude therefrom.

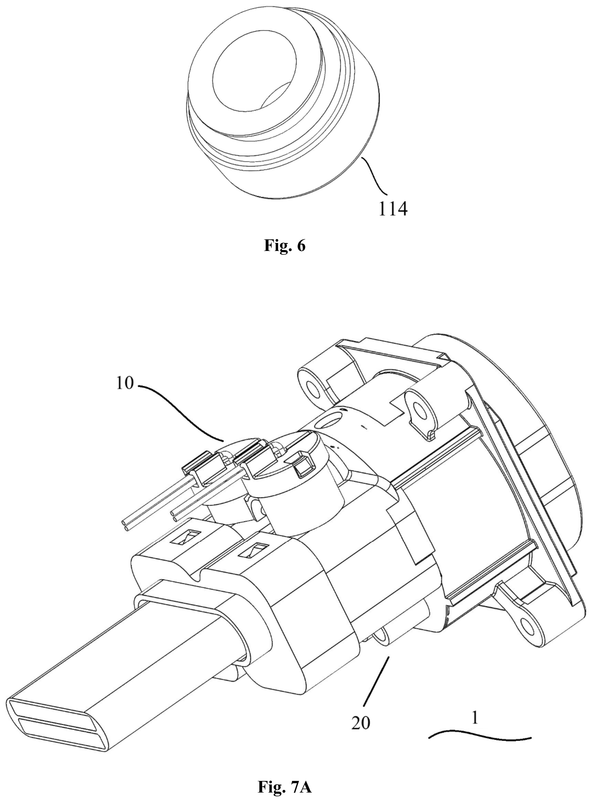

FIG. 6 shows a schematic perspective view of a nut 114. Correspondingly, by way of example, as illustrated, the electrical connection structure 11 further includes two nuts 114, each nut 114 being screwed to press against the respective electrical contact end 1121 and the respective connection end 1112 between the head of the threaded member 113 and the nut 114, with its internal thread in engagement with external thread of the portion of the respective threaded member 113 projecting outwards from the second hole 11120. With this arrangement, considering that the aforementioned arrangement where the electrical contact end 1121 of each conductive core portion 1120 is positioned above the connection end 1112 of the respective terminal body 111 in the vertical direction, by screwing the nut 114 at the bottom, the electrical contact end 1121 positioned above and the respective connection end 1112 positioned below, both of which are located between the threaded member 113 and the nut 114, will be clamped and screwed firmly and reliably by the threaded member 113 and the nut 114.

In an exemplary embodiment according to the present disclosure, the intermediate member 120 is a seal made of a thermally conductive material, as illustrated as a sealing ring. Furthermore, further by way of example, the intermediate member 120 is a sealing ring made of silicone having high thermal conductivity. As such, the high thermal conductivity property of the thermally conductive silicone is utilized to achieve a sufficient heat transfer between the threaded member 113 and the temperature sensing component 1211 of the temperature sensor 121.

In an exemplary embodiment according to the present disclosure, for example, as illustrated, the temperature measuring assembly 12 further includes at least one cover 122 that at least partially covers a top of the intermediate member 120, and the cover 122 is provided with at least one through hole to allow a pin 1212 of the temperature sensor 121 to be led out, axially facing away from the connection member (e.g., threaded member 113, or fastening pin), from the intermediate member 120. With such an arrangement, i.e., by above all inserting the temperature sensing component 1211 of the temperature sensor 121 into the sealing ring functioning as the intermediate member 120 until it abuts against the top of the threaded member 113 to be sufficiently enveloped by the thermally conductive sealing ring, and then snap-fitting the cover 122 onto the top of the sealing member, then, a quick-mount temperature sensing structure for the charging socket 1 is achieved with only two assembly steps, facilitating a convenient assembly.

Based on the above arrangement of the electrical connector assembly 10, on one hand, direct heat transfer from the threaded member 113 to the temperature sensing component 1211 is achieved by the temperature sensing component 1211 directly abutting the top (fully contacting the groove at the top) of the threaded member 113, which is at the screw connection location with the highest temperature rise; on the other hand, the temperature sensing component 1211 is enveloped by the sealing ring made of highly thermally conductive silicone, and the sealing ring also sufficiently covers the remaining exposed portion of the top of the threaded member 113 which is not contacted by the temperature sensing component 1211, thereby achieving auxiliary heat transfer from said remaining exposed portion at the top of the threaded member 113 to the temperature sensing component 1211 which is enveloped, via the thermally conductive sealing ring. As such, sufficient conduction of heat from the threaded member 113 to the temperature sensing component 1211, which is up to or near the achievement of thermal equilibrium, is realized, facilitating improved accuracy of temperature measurement and reducing loss in heat transfer and temperature measurement errors caused by additional mounting structures and heat transfer components. Simultaneously, a convenient assembly with two steps is achieved.

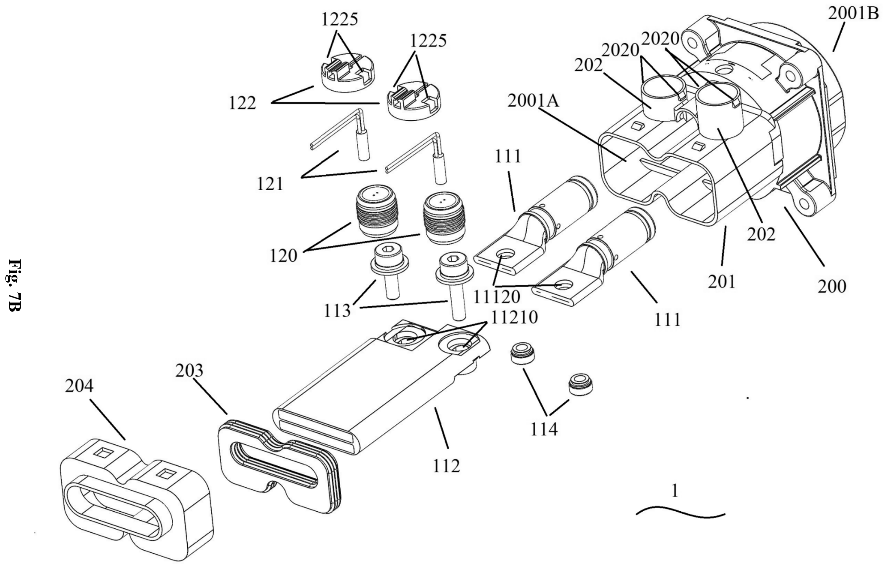

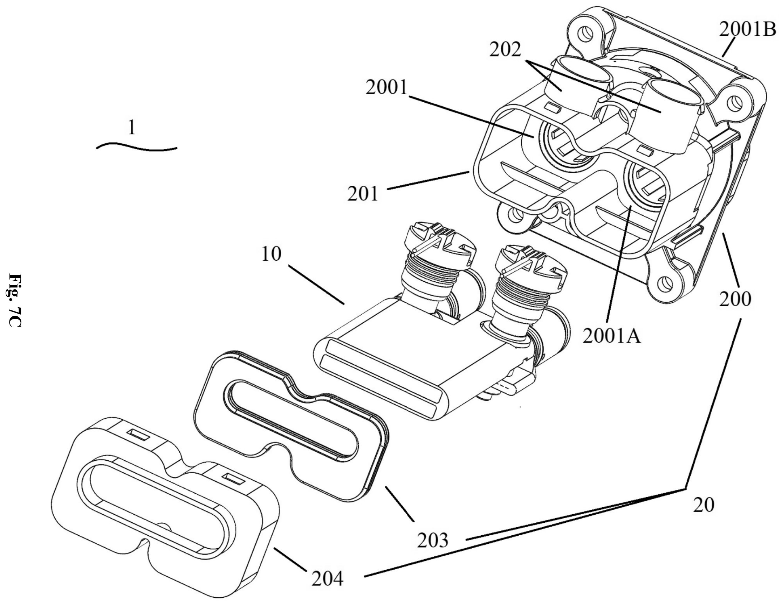

FIG. 7A illustrates a schematic perspective view of a charging socket according to an embodiment of the present disclosure, and FIG. 7B and FIG. 7C respectively illustrate a schematic exploded view, in which the charging socket is completely exploded and a schematic exploded view, in which the charging socket is partially disassembled, of a charging socket according to an embodiment of the present disclosure (in which the electrical connector assembly is completely shown).

According to a second aspect of the present disclosure, as illustrated in FIG. 7A and FIG. 7B, a charging socket 1 is further provided in the present disclosure, preferably, the charging socket 1 is a charging socket for an electric vehicle, including: the aforementioned electrical connector assembly 10; and a housing 20, the housing 20 including: a housing body 200 which is configured to at least partially receive the electrical connector assembly 10.

In an exemplary embodiment according to the present disclosure, for example, as illustrated, the housing 20 further includes: a snout 201 configured to protrude longitudinally from the housing body 200 and configured to at least partially circumferentially constrain a portion of the busbar 112 extending longitudinally beyond the housing body 200; at least one hollow compartment 202 which opens outwards, each compartment 202 extending from the top of the housing body 200 in a vertical direction perpendicular to the longitudinal direction and configured for insertion of the respective threaded member 113 therein.

By way of example, as illustrated, an outer surface of each compartment 202 is provided with a pair of lugs 2020 circumferentially arranged to be opposite to each other, and correspondingly, a pair of notches 1225 are formed on an outer side of the respective cover 122 and diametrically arranged to be opposite to each other, each lug 2020 and respective notch being snap-fitted to each other, when assembled, to removably connect the respective cover 122 to each compartment 202.

In a further exemplary embodiment according to the present disclosure, for example, as illustrated, a spacer 2001 is formed on an inter side of the housing body 200 and located at a radially middle portion, the spacer 2001 dividing the interior of the housing 20 into a first chamber 2001A facing the busbar 112 and a second chamber 2001B facing away from the busbar 112. The first chamber 2001A is configured to accommodate at least a portion of the busbar 112 and the connection end 1112 of the at least one terminal body 111, and the second chamber 2001B is configured to accommodate the plug end 1111 of the at least one terminal body 111. The provision of the spacer 2001 facilitates fixing the plug portion so as to facilitating reliably receiving a mating terminal as inserted, and achieves a physical isolation between the space accommodating the mating terminal and a space for screw connection, avoiding mutual material intrusion and influence on electrical conduction and heat transfer.

In an exemplary embodiment according to the present disclosure, for example, as illustrated, the electrical contact end 1121 of the busbar 112 is accommodated within the first chamber 2001A inside the housing body 200, and a portion of the busbar 112 other than the electrical contact end 1121 is at least partially accommodated within the snout 201. Thereby, the busbar is firmly seated in position within the housing body and the snout.

In an exemplary embodiment according to the present disclosure, for example, as illustrated, the at least one connecting piece is inserted into the first chamber 2001A inside the housing body 200 by passing through a respective compartment 202. And correspondingly, a respective intermediate member 120 is inserted within the first chamber 2001A inside the housing body 200 by at least partially passing through the respective compartment 202. Thereby, the connecting piece (e.g., threaded member 113) and the respective intermediate member 120 are positioned in place through the housing body and the respective compartment.

In a still further exemplary embodiment according to the present disclosure, for example, as illustrated, the charging socket 1 further includes: a gasket 203 sleeved around the busbar 112 and arranged between the housing body 200 and the busbar 112, and abutting against a side of the spacer 2001 facing away from the second chamber 2001B; and a plug portion 204 sleeved around the busbar 112 and accommodated within the snout 201 longitudinally outside the gasket 203, and configured to press the gasket 203 toward the spacer 2001. Thus, a sufficient sealing of the interior is achieved, preventing intrusion of dust, foreign matter, moisture, etc., into the conductive structure and heat transfer path, and avoiding adverse effects on electrical conductive performance, heat transfer, and temperature sensing.

Moreover, considering that the charging socket 1 as provided by the second aspect of the present disclosure includes the aforementioned electrical connector assembly 10, it also possesses the advantages of the aforementioned electrical connector assembly 10, which will not be repeated here.

According to a third aspect of the present disclosure, an electrical connector 1 is further provided in the present disclosure, including: the aforementioned charging socket 1; and a mating plug connector. The mating plug connector includes: a mating electrical connector assembly, which is electrically connected to the electrical connector assembly 10; and a mating housing configured to mate with the housing 20, and the mating housing defines a receptacle hole for the electrical connector assembly 10 to be inserted into and docked with the mating electrical connector assembly.

The electrical connector assembly 10 and the charging socket 1 in the foregoing embodiments of the present disclosure can be used for charging electric vehicles or other electric devices. The foregoing description is intended to be illustrative, rather than limiting. Although the present disclosure has been described in conjunction with the accompanying drawings, the embodiments disclosed in the drawings are intended to be illustrative of preferred embodiments of the present disclosure and should not be construed as limiting the present disclosure. Accordingly, those skilled in the art will appreciate that modifications may be made without departing from the principles and spirit of the overall inventive concept of the present disclosure, and the structures described in the various embodiments may be freely combined where no conflict in structure or principle arises.

The breadth and scope of the present disclosure should not be limited by any of the above-described exemplary embodiments, but should be defined only in accordance with the following claims and their equivalents.

It should be noted that the word "comprising" does not exclude other elements or steps, and the word "a" or "an" does not exclude a plurality. Additionally, any reference signs in the claims shall not be construed as limiting the scope of the present disclosure.

## Claims

1. An electrical connector assembly (10) comprising:
an electrical connection structure (11), comprising:
at least one terminal body (111) provided with a plug end (1111) and a connection end (1112) opposite to each other;
a busbar (112) provided with at least one electrical contact end (1121); and
at least one connecting piece connected between respective electrical contact end and the connection end of the respective terminal body for establishing an electrically conductive connection therebetween,
wherein the electrical connector assembly further comprises at least one temperature measuring assembly (12), each comprising:
a heat-conducting intermediate member (120) pressed against a respective connecting piece; and
a temperature sensor (121) inserted into the intermediate member (120) and comprising a temperature sensing component (1211), which is surrounded by the intermediate member and is in contact with the respective connecting piece and is configured to sense a temperature at which it is located, and a heat transfer path is established between the temperature sensing component and the connecting piece.

2. The electrical connector assembly (10) of claim 1, wherein,
the temperature sensing component (1211) is arranged to be surrounded by the intermediate member (120) and pressed into heat-transferring contact against a top of the respective connecting piece.

3. The electrical connector assembly (10) of claim 1, wherein the at least one terminal body (111) comprises two terminal bodies (111), each being provided with a cylindrical plug end (1111) and a flat connection end (1112) opposite to each other, the cylindrical plug end (1111) being configured to be mated with a respective mating terminal of a mating electrical connector;
wherein the busbar (112) comprises:
two conductive core portions (1120) electrically connected to respective connection ends (1112) of the two terminal bodies (111) respectively, each of the conductive core portions (1120) being provided with an electrical contact end (1121) extending towards the respective terminal body (111); and
an insulation portion (1122) comprising a first insulation section (1122A) interposed between the two conductive core portions and a second insulation section (1122B) wrapped outside the two conductive core portions (1120),
wherein optionally: in response to the connection end (1112) and the respective electrical contact end (1121) being pressed against each other and in contact with each other, the at least one connecting piece comprises at least one threaded member (113) extending through and threaded between the respective electrical contact end and the connection end of the respective terminal body (111), the at least one threaded member (113) comprising two threaded members (113), each threaded member (113) extending through and pressing against the electrical contact end (1121) of the respective conductive core portion (1120) and the connection end (1112) of the respective terminal body (111) to establish a conductive connection therebetween.

4. The electrical connector assembly (10) of claim 3, wherein in response to the connection end (1112) and the respective electrical contact end (1121) being directly secured together with each other, the at least one connecting piece comprises at least one conductive contact secured to both the respective electrical contact end and the connection end of the respective terminal body, respectively,
wherein optionally: the connection ends (1112) and respective electrical contact ends (1121) are soldered to each other or crimped to fit with each other,
and/or,
wherein optionally: the at least one conductive contact comprises a fastening pin.

5. The electrical connector assembly (10) of claim 1, wherein the temperature sensor (121) further comprises at least one pin (1212) arranged to lead out of the temperature sensing component (1211) and extend outside the intermediate member (120) and configured to output an electrical signal of the temperature sensor (121),
wherein optionally: the intermediate member (120) presses against and substantially covers an upper exposed portion at the top of the respective connecting piece other than a portion of the connecting piece covered by the temperature sensing component (1211), and/or,
wherein optionally: the temperature sensor (121) is disposed centrally inside the intermediate member (120), preferably coaxially with the intermediate member (120), and/or,
wherein optionally: the temperature measuring assembly (12) further comprises at least one cover (122) that at least partially covers a top of the intermediate member (120), and the cover (122) is provided with at least one through hole to allow a pin (1212) of the temperature sensor (121) to be led out, axially facing away from the connection member, from the intermediate member (120).

6. The electrical connector assembly (10) according to claim 3, wherein each of the terminal bodies (111) extends in a longitudinal direction and is provided with the plug end (1111) that is cylindrical and the connection end (1112) that is flattened, the plug end (1111) and the connection end (1112) being opposite to each other in the longitudinal direction,
wherein optionally: each of the terminal bodies (111) extends in a vertical direction perpendicular to the longitudinal direction and is provided with the plug end (1111) that is cylindrical and the connection end (1112) that is flattened, the plug end (1111) and the connection end (1112) being opposite to each other in the vertical direction, the connection end (1112) being arranged to extend perpendicular to the vertical direction to at least partially overlap and contact the electrical contact end (1121) of the respective conductive core portion (1120),
and/or,
wherein optionally: the two conductive core portions (1120) of the busbar (112) are each in the shape of plate and both are overlaid in a vertical direction perpendicular to the longitudinal direction and spaced apart by the first insulating section (1122A), and the respective electrical contact ends (1121) of the two conductive core portions (1120) are biased to be mutually offset in a transverse direction perpendicular to both the longitudinal direction and the vertical direction, respectively.

7. The electrical connector assembly (10) according to claim 6, wherein the electrical contact end (1121) of each of the conductive core portions (1120) and the connection end (1112) of the respective terminal body (111) are overlaid in a vertical direction perpendicular to the longitudinal direction,
wherein optionally: the electrical contact end (1121) of each of the conductive core portions (1120) is positioned above the connection end (1112) of the respective terminal body (111) in the vertical direction.

8. The electrical connector assembly (10) of claim 7, wherein a respective electrical contact end (1121) of each of the conductive core portions (1120) is formed with a through first hole (11210), and a through second hole (11120) is formed for a connection end (1112) of a respective terminal body (111) of each of the conductive core portions (1120), the first hole (11210) and the respective second hole (11120) being aligned with each other, and
a respective connecting member or for each of the conductive core portions (1120) sequentially extends through the first hole (11210) and the second hole (11120),
wherein optionally: each of the conductive core portions (1120) further comprises an electrical connection barrel (11201) comprising:
a hollow conductive cylinder portion (11201A), a cylindrical outer surface of the conductive cylinder portion (11201A) being adapted to be received in the first hole (11210) of the electrical contact end (1121) of the conductive core portion (1120); and a peripheral flange (11201B) extending outward in a circumferential direction from an outer surface of the conductive cylinder portion (11201A);
wherein optionally: the interior of the conductive cylinder portion (11201A) defines a through hole having an elliptical cross-section extending vertically therethrough, with a minor axis of the elliptical cross-section being dimensioned to receive a respective connecting piece,
wherein optionally: the elliptical cross-section of the through hole of the conductive cylinder portion (11201A) has a major axis parallel to the longitudinal direction;
and/or
wherein optionally: respective electrical connection barrels (11201) of the two conductive core portions (1120) extend from lower surfaces of the respective conductive core portions (1120) by different lengths, with a difference therebetween being substantially equal to a distance (L) of respective lower surfaces of the two conductive core portions (1120) in the vertical direction.

9. The electrical connector assembly (10) of claim 8, wherein,
an upper portion of the first hole (11210) is provided with a first recessed portion (11210A), which is configured to at least partially receive and constrain a head of a respective threaded member (113),
a lower portion of the first hole (11210) is provided with a second recessed portion (11210B), which is configured to at least partially receive and constrain a peripheral flange (11201B) of a respective electrical connection barrel (11201), and
the second hole (11120) is a through hole which is provided with a smooth inner wall having a single inner diameter for a free end of the threaded member (113) to extend therethrough and protrude therefrom,
wherein optionally: the electrical connection structure (11) further comprises two nuts (114), each nut (114) being screwed to press against the respective electrical contact end (1121) and the respective connection end (1112) between a head of the threaded member (113) and the nut (114), with its internal thread in engagement with external thread of the portion of the respective threaded member (113) projecting outwards from the second hole (11120).

10. The electrical connector assembly (10) of claim 1, wherein the intermediate member (120) is a seal made of a thermally conductive material,
wherein optionally: the intermediate member (120) is a sealing ring made of silicone having high thermal conductivity.

11. A charging socket (1) comprising:
the electrical connector assembly (10) according to any one of claims 1 to 10; and
a housing (20) comprising a housing body (200) which is configured to at least partially receive the electrical connector assembly (10).

12. The charging socket (1) according to claim 11, wherein the housing (20) further comprises:
a snout (201) configured to protrude longitudinally from the housing body (200) and
configured to at least partially circumferentially constrain a portion of the busbar (112) extending longitudinally beyond the housing body (200);
at least one hollow compartment (202) which opens outwards, each compartment (202) extending from the top of the housing body (200) in a vertical direction perpendicular to the longitudinal direction and configured for insertion of the respective threaded member (113) therein.

13. The charging socket (1) according to claim 12, wherein a pair of lugs (2020) are provided on an outer surface of each compartment (202) and circumferentially arranged to be opposite to each other, and a pair of notches (1225) are formed on an outer side of the respective cover (122) and diametrically arranged to be opposite to each other, each lug (2020) and respective notch being snap-fitted to each other, when assembled, to removably connect the respective cover (122) to each compartment (202).

14. The charging socket (1) according to claim 13, wherein a spacer (2001) is formed at a radially middle portion on an inter side of the housing body (200), the spacer dividing the interior of the housing (20) into a first chamber (2001A) facing the bus bar (112) and a second chamber (2001B) facing away from the bus bar (112), the first chamber (2001A) being configured to accommodate at least a portion of the bus bar (112) and the connection end (1112) of the at least one terminal body (111), and the second chamber (2001B) being configured to accommodate the plug end (1111) of the at least one terminal body (111).

15. The charging socket (1) according to claim 14, wherein the electrical contact end (1121) of the bus bar (112) is accommodated within the first chamber (2001A) inside the housing body (200), and a portion of the bus bar (112) other than the electrical contact end (1121) is at least partially accommodated within the snout (201),
and/or,
wherein the at least one connecting piece is inserted into the first chamber (2001A) inside the housing body (200) by passing through a respective compartment (202), and a respective intermediate member (120) is inserted within the first chamber (2001A) inside the housing body (200) by at least partially passing through the respective compartment (202),
and/or
the charging socket (1) further comprising:
a gasket (203) sleeved around the bus bar (112) and arranged between the housing body (200) and the bus bar (112), and abutting against a side of the spacer (2001) facing away from the second chamber (2001B); and
a plug portion (204) sleeved around the bus bar (112) and accommodated within the snout (201) longitudinally outside the gasket (203) and configured to press the gasket (203) toward the spacer (2001).
